(19) Europäisches Patentamt
European Patent Office
Office européen des brevets

(11) EP 3 098 250 A1

(12) EUROPÄISCHE PATENTANMELDUNG

(43) Veröffentlichungstag:
**30.11.2016 Patentblatt 2016/48**

(51) Int Cl.:
***C08G 64/34*** *(2006.01)* ***C08G 65/26*** *(2006.01)*

(21) Anmeldenummer: **15169253.0**

(22) Anmeldetag: **26.05.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Covestro Deutschland AG**
**51373 Leverkusen (DE)**

(72) Erfinder:
- **Müller, Thomas Ernst**
  **52074 Aachen (DE)**
- **Gürtler, Christoph**
  **50735 Köln (DE)**
- **Pohl, Michael**
  **52074 Aachen (DE)**
- **Subhani, Muhammad Afzal**
  **52066 Aachen (DE)**
- **Leitner, Walter**
  **52074 Aachen (DE)**

(74) Vertreter: **Levpat**
**c/o Covestro AG**
**Gebäude 4825**
**51365 Leverkusen (DE)**

# (54) VERFAHREN ZUR HERSTELLUNG VON POLYETHERCARBONATPOLYOLEN

(57) Die Erfindung betrifft ein Verfahren zur Herstellung von Polyethercarbonatpolyolen durch Anlagerung von Alkylenoxiden und Kohlendioxid an Carbonsäuren in Gegenwart eines Doppelmetallcyanid (DMC)-Katalysators, wobei ein oder mehrere Carbonsäuren während der Reaktion kontinuierlich in den Reaktor zudosiert werden, dadurch gekennzeichnet, dass
- die Carbonsäure mindestens difunktionell ist und einen mit einem pKa Wert größer gleich 1,5 aufweist, und
- die Zugabe der ein oder mehreren Carbonsäure so erfolgt, dass zu jedem Zeitpunkt des erfindungsgemäßen Verfahrens die molare Konzentration von nicht umgesetzter Carbonsäure im Reaktionsgemisch einen Wert in Höhe von 0,001 mol/g multipliziert mit der pro Liter Reaktionsmischung eingesetzten Masse des Katalysators angegeben in Gramm nicht überschreitet, und
- zwei im gleichen Molekül vorliegende Carbonsäuregruppen mindestens durch ein Kohlenstoffatom voneinander getrennt sind.

Das Verfahren betrifft weiterhin nach dem erfindungsgemäßen Verfahren erhaltene Polyethercarbonatpolyole.

EP 3 098 250 A1

## Beschreibung

Die vorliegende Erfindung betrifft ein Verfahren zur Herstellung von Polyethercarbonatpolyolen aus Carbonsäuren als Starterverbindungen, einem oder mehreren Alkylenoxiden und Kohlendioxid in Gegenwart eines Doppelmetallcyanid- (DMC-) Katalysators. Sie betrifft weiterhin nach dem erfindungsgemäßen Verfahren erhaltene Polyethercarbonatpolyole.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist nachfolgend schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema gezeigte Polyethercarbonatpolyol beschränkt ist. Diese Reaktion ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in dem Schema gezeigte cyclische Carbonat (beispielsweise für R = $CH_3$ Propylencarbonat).

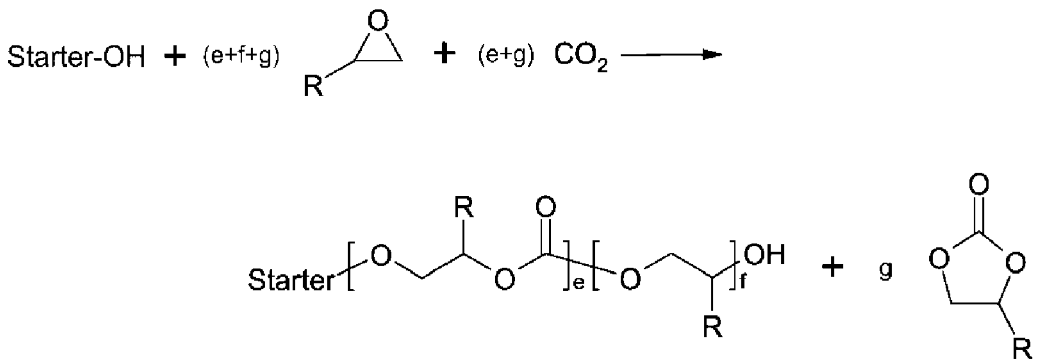

Zur weiteren Erhöhung der Nachhaltigkeit der erhaltenen Polyethercarbonatpolyole wäre es wünschenswert H-funktionelle Startersubstanzen ("Starter"), die nicht auf fossilen Rohstoffen basieren, für das Verfahren verfügbar zu machen. Eine aus Naturprodukten gut zugängliche Stoffklasse sind Carbonsäuren. Beispielsweise sind Äpfelsäure, Bernsteinsäure, Milchsäure und Zitronensäure gut über Fermentation zugänglich. Ein Verfahren zur enzymatischen Herstellung von 5-Norbornen-2-carbonsäure wird beschrieben in Eur. J. Biochem. 182, 349-156, 1989. Ein fermentatives Verfahren zur Herstellung von 5-Norbornen-2-carbonsäure ist beschrieben in WO 2007071578 A2. Gut zugängliche Naturprodukte sind weiterhin Aminosäuren, die ebenfalls eine Carbonsäuregruppe enthalten.

Als Katalysatoren für die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") sind Doppelmetallcyanid-Verbindungen besonders geeignet.

WO-A 2008/092767 offenbart ein Verfahren zur Herstellung von Polyethercarbonatpolyolen, dadurch gekennzeichnet, dass eine oder mehrere H-funktionelle Startersubstanzen im Reaktor vorgelegt werden und dass eine oder mehrere H-funktionelle Startersubstanzen während der Reaktion kontinuierlich in den Reaktor zudosiert werden. Als für die Alkoxylierung aktive Gruppen mit aktiven H-Atomen wird auch $CO_2H$ aufgeführt.

EP 2703425 A1 offenbart ein Verfahren zur Herstellung von Polyethercarbonatpolyolen durch Anlagerung von Alkylenoxiden und Kohlendioxid an eine oder mehrere H-funktionelle Startersubstanz(en) in Gegenwart eines Doppelmetallcyanid-Katalysators, dadurch gekennzeichnet, dass ein Suspensionsmittel, das keine H-funktionellen Gruppen enthält in einem Reaktor vorgelegt wird und eine oder mehrere H-funktionelle Startersubstanz(en) während der Reaktion kontinuierlich in den Reaktor zudosiert werden. Als monofunktionelle Startersubstanzen werden auch Carbonsäuren (monofunktionelle Carbonsäuren wie Ameisensäure, Essigsäure, Propionsäure, Buttersäure und Fettsäuren wie Stearinsäure, Palmitinsäure, Ölsäure, Linolsäure, Linolensäure, sowie Benzoesäure und Acrylsäure) offenbart.

Für die katalytische Umsetzung von Alkylenoxiden (Epoxiden) und Kohlendioxid geeignete Doppelmetallcyanid-Katalysatoren zeichnen sich durch eine gewisse Basizität aus. In keinem der zuvor genannten Dokumente wird ausgeführt, wie bei Zugabe von Carbonsäuren eine Neutralisierung der Basizität und eine herabgesetzte Aktivität bzw. eine Deaktivierung des eingesetzten DMC-Katalysators vermieden werden kann.

Es war daher Aufgabe der vorliegenden Erfindung, ein Verfahren zur Herstellung von Polyethercarbonatpolyolen bereitzustellen, bei dem Carbonsäuren als H-funktionelle Startersubstanzen eingesetzt werden und wobei das Verfahren zu einem Produkt führt, welches zu einem hohen Gehalt an eingebautem $CO_2$ im resultierenden Polyethercarbonatpolyol führt.

Überraschend wurde gefunden, dass die erfindungsgemäße Aufgabe gelöst wird durch ein Verfahren zur Herstellung von Polyethercarbonatpolyolen durch Anlagerung von Alkylenoxiden und Kohlendioxid an Carbonsäuren in Gegenwart eines Doppelmetallcyanid (DMC)-Katalysators, wobei ein oder mehrere Carbonsäuren während der Reaktion kontinuierlich in den Reaktor zudosiert werden, dadurch gekennzeichnet, dass

- die Carbonsäure mindestens difunktionell ist und einen mit einem pKa Wert größer gleich 1,5 aufweist,
- die Zugabe der ein oder mehreren Carbonsäuren so erfolgt, dass zu jedem Zeitpunkt des erfindungsgemäßen Verfahrens die molare Konzentration von nicht umgesetzter Carbonsäure im Reaktionsgemisch einen Wert in Höhe von 0,001 mol/g multipliziert mit der pro Liter Reaktionsmischung eingesetzten Masse des Katalysators angegeben in Gramm nicht überschreitet, und
- zwei im gleichen Molekül vorliegende Carbonsäuregruppen mindestens durch ein Kohlenstoffatom voneinander getrennt sind.

Bei einer kontinuierlichen Dosierung der Carbonsäure nach dem erfindungsgemäßen Verfahren wird der Doppelmetallcyanid-Katalysator nicht oder nur in geringem Ausmaß durch die eingesetzte Carbonsäure inhibiert oder deaktiviert. Die erhaltenen Polyethercarbonatpolyole weisen einen hohen Gehalt an eingebautem $CO_2$ auf. Das Molekulargewicht des erhaltenen Polyethercarbonatpolyols entspricht dem Summenprodukt aus der molaren Mengen der umgesetzten Reaktanden und ihrem Molekulargewicht geteilt durch die molare Menge der als H-funktionellen Startersubstanzen eingesetzten Carbonsäure. Die erhaltenen Polyethercarbonatpolyole weisen eine enge Molekulargewichtsverteilung auf.

Ohne an eine Theorie gebunden zu sein, resultiert die Konzentration von nicht umgesetzter Carbonsäure aus der Dosierrate der Carbonsäure und der Umsetzungsrate von Carbonsäure in den Carbonsäureester. Die molare Konzentration von nicht umgesetzter Carbonsäure im Reaktionsgemisch kann beispielsweise über *in situ* IR Spektroskopie bestimmt werden. Carbonsäuren weisen im IR Spektrum eine charakteristische Bande (A) bei 1710 $cm^{-1}$, Epoxide eine charakteristische Bande (B) bei 820 $cm^{-1}$ auf. Es hat sich als günstig erwiesen, wenn die Zugabe der Carbonsäure so erfolgt, dass zu jedem Zeitpunkt des erfindungsgemäßen Verfahrens das Verhältnis der Intensität der beiden Banden A/B kleiner als 1, bevorzugt kleiner als 0,1 und ganz besonders bevorzugt kleiner als 0,01 beträgt, worin A die Intensität der Bande bei einer Wellenzahl von $1710 \pm 10$ $cm^{-1}$ und B die Intensität der Bande bei einer Wellenzahl von $820 \pm 10$ $cm^{-1}$ darstellt. Die Intensität der Banden wird hier auf der Basis eines Spektrums berechnet, bei der der Hintergrund abgezogen ist. Die Analyse der Banden des Spektrums kann beispielsweise mit Hilfe der Software Peaxact erfolgen. Bei diesen Werten von A/B liegen günstige Verhältnisse zwischen Dosierrate der Carbonsäure und der Umsetzungsrate von Carbonsäure vor.

Das erfindungsgemäße Verfahren beinhaltet, dass die molare Konzentration von nicht umgesetzter Carbonsäure im Reaktionsgemisch einen bestimmten Grenzwert bezogen auf die eingesetzte Konzentration des Katalysators nicht überschreitet. Als günstig erwiesen hat sich ein Maximalwert für die molare Konzentration von nicht umgesetzter Carbonsäure im Reaktionsgemisch in Höhe von 0,001 mol/g, bevorzugt von 0,0005 mol/g und besonders bevorzugt von 0,0001 mol/g multipliziert mit der pro Liter Reaktionsmischung eingesetzten Masse des Katalysators angegeben in Gramm. Bei einer molaren Konzentration von nicht umgesetzter Carbonsäure im Reaktionsgemisch unterhalb des Grenzwertes kann die Dosierrate der Carbonsäure heraufgesetzt werden. Bei Ansteigen der Konzentration von nicht umgesetzter Carbonsäure im Reaktionsgemisch wird die Dosierrate der Carbonsäure herabgesetzt. Als günstig hat sich eine Dosierrate für die Carbonsäure von $\leq 10$ $mol \cdot (g_{DMC} \cdot h)^{-1}$, bevorzugt von $\leq 1$ $mol \cdot (g_{DMC} \cdot h)^{-1}$ und besonders bevorzugt von $\leq 0.1$ $mol \cdot (g_{DMC} \cdot h)^{-1}$ bezogen auf die Masse des in der Reaktionsmischung eingesetzten DMC-Katalysators erwiesen.

Eine bevorzugte Ausführungsform der Erfindung betrifft ein Verfahren zur Herstellung von Polyethercarbonatpolyolen durch Anlagerung von Alkylenoxiden und Kohlendioxid an Carbonsäuren in Gegenwart eines Doppelmetallcyanid (DMC)-Katalysators,
dadurch gekennzeichnet, dass

(α) ein Suspensionsmittel, das keine H-funktionellen Gruppen enthält und ausgewählt ist aus einer oder mehreren Verbindung(en) aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden, in einem Reaktor vorgelegt wird,

(β) gegebenenfalls zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird, und

(γ) eine oder mehrere Carbonsäuren während der Reaktion kontinuierlich in den Reaktor zudosiert werden, wobei

- die Carbonsäure mindestens difunktionell ist und einen mit einem pKa Wert größer gleich 1,5 aufweist,
- die Zugabe der ein oder mehreren Carbonsäuren so erfolgt, dass zu jedem Zeitpunkt des erfindungsgemäßen Verfahrens die molare Konzentration von nicht umgesetzter Carbonsäure im Reaktionsgemisch einen Wert in Höhe von 0,001 mol/g multipliziert mit der pro Liter Reaktionsmischung eingesetzten Masse des Katalysators angegeben in Gramm nicht überschreitet, und
- zwei im gleichen Molekül vorliegende Carbonsäuregruppen mindestens durch ein Kohlenstoffatom voneinander getrennt sind.

Als erfindungsgemäße Carbonsäuren werden eine oder mehrere Verbindungen mit einer Funktionalität von mindestens 2, bevorzugt von 2 bis 8, besonders bevorzugt von 2 bis 6 und ganz besonders bevorzugt von 2 bis 4 eingesetzt. Diese Verbindungen enthalten neben der Carbonsäuregruppe mindestens ein weitere chemische Gruppe mit mindestens einem Zerewitinoffaktiven H-Atom. Chemische Gruppen mit mindestens einem Zerewitinoff-aktiven H-Atom sind bevorzugt $CO_2H$, OH, NHR und $NH_2$. Beispielsweise wird im erfindungsgemäßen Sinne unter einer Carbonsäure mit einer Funktionalität von 2 eine Verbindung verstanden, die entweder zwei Carbonsäuregruppen oder eine Carbonsäuregruppe sowie eine Zerewitinoff-aktive Gruppe ausgewählt aus der Gruppe bestehend aus Hydroxygruppe und sekundäre Amingruppe enthält. Die Polyethercarbonatpolyole werden durch katalytische Anlagerung von Kohlendioxid und Alkylenoxiden an die Carbonsäuregruppe und die weiteren Zerewitinoff-aktiven H-Atome erhalten. Die Funktionalität der Carbonsäure, d.h. die Anzahl der Zerewitinoff-aktiven Gruppen (d.h. für die Alkoxylierung aktiven H-Atomen) je Carbonsäuremolekül bestimmt die Funktionalität, d.h. die durchschnittliche Anzahl der terminalen Hydroxygruppen pro Molekül Polyethercarbonatpolyol. Die Carbonsäuregruppe, Hydroxygruppen sowie sekundäre Amingruppen wirken als eine Zerewitinoff-aktive Gruppe, primäre Amingruppen als zwei Zerewitinoff-aktive Gruppen.

Als Carbonsäure wird mindestens eine Verbindung der Formel RR'R"C-COOH eingesetzt, wobei

- R für einen gegebenenfalls Heteroatom-substituierten Hydroxyalkyl-, Hydroxyalkenyl-, Hydroxyaryl-, Carboxyalkyl-, Carboxyalkenyl- oder Carboxyaryl-Rest oder eine OH, COOH, $NH_2$ oder NHR"' Gruppe steht, wobei R"' einen Alkyl-, Alkenyl- oder Aryl-Rest bedeutet, steht und
- R' und R" unabhängig voneinander für Wasserstoff oder einen gegebenenfalls Heteroatom-substituierten Alkyl-, Alkenyl-, Aryl-, Hydroxyalkyl-, Hydroxyalkenyl-, Hydroxyaryl-, Carboxyalkyl-, Carboxyalkenyl- oder Carboxyaryl-Rest stehen.

Zwei im gleichen Molekül vorliegende Carbonsäuregruppen sind mindestens durch ein Kohlenstoffatom voneinander getrennt. Ohne an eine Theorie gebunden zu sein, führen Polycarbonsäuren mit einem gewissen Abstand zwischen benachbarten Carbonsäuregruppen nicht oder zu einer weniger stark ausgeprägten Inhibierung oder Deaktivierung des eingesetzten Doppelmetallcyanid-Katalysators.

Für das erfindungsgemäße Verfahren geeignete Carbonsäuren haben einem pKa Wert größer gleich 1,5, bevorzugt größer gleich 1,7 und besonders bevorzugt größer gleich 3,0. Als pKa-Wert im Sinne des erfindungsgemäßen Verfahrens wird der negative dekadische Logarithmus der ersten Dissoziationskonstante der Carbonsäure bei einer Temperatur von 25 Grad Celsius verstanden. Ohne an eine Theorie gebunden zu sein, führen schwach saure Carbonsäuren nicht oder zu einer weniger stark ausgeprägten Inhibierung oder Deaktivierung des eingesetzten Doppelmetallcyanid-Katalysators. Der pKa-Wert der Carbonsäure kann über Bestimmung des pH-Werts am Halbäquivalenzpunkt gemessen werden. Dazu wird eine wässrige Lösung der Carbonsäure mit Natronlauge definierter Konzentration titriert und jeweils der pH-Wert der Lösung mit Hilfe einer kalibrierten pH-Einstabmesskette gemessen. Die 1. Ableitung der Titrationskurve weist am Halbäquivalenzpunkt, der der ersten Dissoziationskonstante entspricht, ein erstes Maximum auf. Gemäß der Henderson-Hasselbalch-Gleichung entspricht am Halbäquivalenzpunkt der pKa-Wert dem gemessenen pH-Wert, da die Säure und ihre korrespondierende Base in gleicher Konzentration vorliegen. Carbonsäuren, die eine unzureichende Löslichkeit in Wasser aufweisen, werden in

Methanolischer Lösung ($pK_{Ly}$ = 16,7) oder Ethanolischer Lösung ($pK_{Ly}$ = 19,1) titriert, wobei $pK_{Ly}$ für nicht wässrige Medien wie folgt definiert ist:

$$K_{Ly} = \frac{c(HLy^+) * c(A^-)}{c(HA)}$$

$$pK_{Ly} = -\log(K_{Ly})$$

Die Länge der pH-Skala ergibt sich aus dem $pK_{Ly}$-Wert (vgl. Wasser $pk_a$ 14), der Neutralpunkt bei dem Lyonium-Ion und Lyat-Ion in gleicher Konzentration vorliegen liegt bei $\frac{pK_{Ly}}{2}$. Eine Beschreibung von Methoden zur Bestimmung des pKa-Wertes findet sich beispielsweise in T. Mussini et al., Pure & Appl. Chem., 1985, Vol. 57, No. 6, pp. 865-876.

Beispiele für geeignete Carbonsäuren sind Verbindungen ausgewählt aus der Gruppe enthaltend Malonsäure, Maleinsäure, Fumarsäure, Bernsteinsäure, Oxalessigsäure, Glutarsäure, Adipinsäure, Pimelinsäure, Korksäure, Acelainsäure, Sebacinsäure, Glycolsäure, Milchsäure, Tartronsäure, Apfelsäure, Weinsäure, Zitronensäure, Isozitronensäure, Mandelsäure, Gallussäure, γ-Hydroxybuttersäure, γ-Aminobuttersäure, Ricinolsäure, Salicylsäure, Hippursäure, Phthalsäure, Isophthalsäure, Terephthalsäure, Shikimisäure, Chinasäure, Chorisminsäure, Gluconsäure. Ebenfalls geeignet sind Aminosäuren wie Alanin, Arginin, Apsaragin, Asparaginsäure, Glutamin, Glutaminsäure, Glycin, Histidin, Isoleucin, Leucin, Lysin, Methionin, Phenylalanin, Prolin, Serin, Threonin, Tryptophan, Tyrosin, Valin.

Zu Schritt (α):

Bei dem erfindungsgemäßen Verfahren kann zunächst ein Suspensionsmittel enthält, im Reaktor vorgelegt werden. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem inerten Suspensionsmittel suspendiert und anschließend die Suspension in den Reaktor eingebracht werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten bevorzugt keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Als erfindungsgemäß eingesetzte Suspensionsmittel sind ebenfalls geeignet aliphatische Lactone, aromatische Lactone, Lactide, cyclische Carbonate mit mindestens drei gegebenenfalls substituierten Methylengruppen zwischen den Sauerstoffatomen der Carbonatgruppe, aliphatische cyclische Anhydride und aromatischen cyclische Anhydride.

Aliphatische oder aromatische Lactone in Sinne der Erfindung sind cyclische Verbindungen enthaltend eine Esterbindung im Ring, vorzugsweise

4-gliedrige Ringlactone wie ß-Propiolacton, ß-Butyrolacton, ß-Isovalerolacton, ß-Caprolacton, β-Isocaprolacton, ß-Methyl-ß-valerolacton,

5-gliedrige Ringlactone, wie γ-Butyrolacton, γ-valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on,

6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on,

höhergliedrige Ringlactone, wie (7*E*)-Oxacycloheptadec-7-en-2-on.

Besonders bevorzugt ist ε-Caprolacton und Dihydrocumarin.

Lactide in Sinne der Erfindung sind cyclische Verbindungen enthaltend zwei oder mehr Esterbindungen im Ring, vorzugsweise Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Cyclische Carbonate mit mindestens drei gegebenenfalls substituierten Methylengruppen zwischen den Sauerstoffatomen der Carbonatgruppe sind vorzugsweise Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Anhydride sind vorzugsweise Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Suspensionsmittel kann auch eine Mischung aus zwei oder mehreren der genannten Suspensionsmittel eingesetzt werden. Höchst bevorzugt wird in Schritt ($\alpha$) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, $\varepsilon$-Caprolacton, Dihydrocumarin, Trimethylencarbonat, Neopentylglykolcarbonat, 3,6-Dimethyl-1,4-dioxane-2,5-dion, Succinsäure-anhydrid, Maleinsäureanhydrid und Phthalsäureanhydrid eingesetzt.

Der DMC-Katalysator wird vorzugsweise in einer Menge eingesetzt, so dass der Gehalt an DMC-Katalysator im nach Schritt ($\gamma$) resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in Schritt ($\alpha$) in das resultierende Gemisch (i) aus Suspensionsmittel und (ii) DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird in Schritt ($\alpha$) das resultierende Gemisch (i) aus Suspensionsmittel und (ii) DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt ($\alpha$)

($\alpha$-I) Suspensionsmittel vorgelegt und

($\alpha$-II) die Temperatur des Suspensionsmittels auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel in Schritt ($\alpha$-I) oder unmittelbar anschließend in Schritt ($\alpha$-II) zugesetzt wird enthält.

Zu Schritt (β):

Schritt (β) dient der Aktivierung des DMC-Katalysators und bezieht sich somit auf die Ausführungsform des erfindungsgemäßen Verfahrens in Gegenwart eines DMC-Katalysators. Dieser Schritt (β) kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge des Alkylenoxids in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. des Suspensionsmittels bei erhöhter Temperatur und/oder reduziertem Druck, gegebenenfalls unter Durchleiten eines Inertgases durch die Reaktionsmischung, vorgelagert sein.

In einer bevorzugten Ausführungsform wird Schritt (β) unter Inertgasatmosphäre, unter einer Atmosphäre aus Inertgas-Kohlendioxid-Gemisch oder unter einer Kohlendioxid-Atmosphäre durchgeführt, besonders bevorzugt wird Schritt (β) unter einer Kohlendioxid-Atmosphäre durchgeführt.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und

(β2) in einer zweiten Aktivierungsstufe die Zugabe einer zweiten Teilmenge von Alkylenoxid unter Kohlendioxid-Atmosphäre erfolgt.

Zu Schritt (γ):

Die Dosierung der Carbonsäure, Alkylenoxid und gegebenenfalls auch des Kohlendioxids kann simultan oder sequentiell (portionsweise) erfolgen, beispielsweise kann die gesamte Kohlendioxidmenge, die Menge an Carbonsäure und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der Carbonsäure den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung von Alkylenoxid und/oder von Carbonsäure erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. der Carbonsäure kann simultan oder sequentiell (portionsweise) über jeweils separate Dosierungen (Zugaben) erfolgen oder über eine oder mehrere Dosierungen, wobei das Alkylenoxid bzw. die Carbonsäure einzeln oder als Gemisch dosiert werden können. Über die Art

und/oder Reihenfolge der Dosierung der Carbonsäure, der Alkylenoxide und/oder des Kohlendioxids ist es möglich, statistische, alternierende, blockartige oder gradientenartige Polyethercarbonatpolyole zu synthetisieren.

In einer bevorzugten Ausführungsform wird in Schritt (γ) die Dosierung der Carbonsäure zeitlich vor der Zugabe des Alkylenoxids beendet.

Eine bevorzugte Ausführungsform des erfindungsgemäßen Verfahrens ist unter anderem dadurch gekennzeichnet, dass in Schritt (γ) die Gesamtmenge der Carbonsäure zugegeben wird. Diese Zugabe kann mit einer konstanten Dosierrate, mit einer variierenden Dosierrate oder portionsweise erfolgen.

Bevorzugt werden die Polyethercarbonatpolyole in einem kontinuierlichen Verfahren hergestellt, wobei Schritt (γ) DMC-Katalysator und ein oder mehrere Carbonsäuren während der Reaktion kontinuierlich in den Reaktor dosiert wird werden und das resultierende Reaktionsgemisch kontinuierlich aus dem Reaktor entfernt wird.

Die Dosierung des Alkylenoxids, der Carbonsäure und des DMC-Katalysators kann über separate Dosierstellen erfolgen. In einer bevorzugten Ausführungsform werden das Alkylenoxid und die Carbonsäure über separate Dosierstellen dem Reaktionsgemisch zugeführt. In einer weiteren Ausführungsform werden der Doppelmetallcyanid-Katalysator und die Carbonsäure über separate Dosierstellen dem Reaktionsgemisch zugeführt.

Für das erfindungsgemäße Verfahren hat sich weiterhin gezeigt, dass die Copolymerisation (Schritt (γ)) zur Herstellung der Polyethercarbonatpolyole vorteilhafterweise bei einer Temperatur von 90 bis 150°C, bevorzugt bei 100 bis 130°C, besonders bevorzugt bei 110 bis 130°C durchgeführt wird. Werden Temperaturen unterhalb von 90°C eingestellt, wird die Reaktion in Gegenwart von Carbonsäuren sehr langsam. Bei Temperaturen oberhalb von 150°C steigt die Menge an unerwünschten Nebenprodukten stark an. In einer bevorzugten Ausführungsform werden die Schritte (β) und/oder (γ) bei einer Temperatur von ≥ 100 °C bis ≤ 130 °C durchgeführt.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen. In einer bevorzugten Ausführungsform werden die Schritte (β) und/oder (γ) bei einem Druck von ≥ 10 mbar bis ≤ 100 bar durchgeführt.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierten DMC-Katalysator enthaltende Mischung in demselben Reaktor weiter mit einem oder mehreren Alkylenoxid(en), einer oder mehreren Startersubstanz(en) und Kohlendioxid umgesetzt. In einer weiteren bevorzugten Ausführungsform wird die gemäß den Schritten (α) und (β) resultierende aktivierten DMC-Katalysator enthaltende Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor werden die gemäß den Schritten (α) und (β) resultierende aktivierten DMC-Katalysator enthaltende Mischung, eine oder mehrere H-funktionelle Startersubstanz(en), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die

gleichzeitig die Durchmischung und Wärmeabfuhr verbessern.

Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Beispielsweise wird für das kontinuierliche Verfahren zur Herstellung der Polyethercarbonatpolyole gemäß den Schritten (α) und (β) eine aktivierte DMC-Katalysatorenthaltende Mischung hergestellt, dann werden gemäß Schritt (γ)

(γ1) jeweils eine Teilmenge an Carbonsäure, Alkylenoxid und Kohlendioxid zudosiert zum Initiieren der Copolymerisation, und

(γ2) während des Fortschreitens der Copolymerisation jeweils die verbleibende Menge an DMC-Katalysator, Carbonsäure und Alkylenoxid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird die Menge DMC-Katalysator vorzugsweise so gewählt ist, dass der Gehalt an DMC-Katalysator in dem bei Schritt (γ) resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Es ist auch überraschend gefunden worden, dass das Verfahren der vorliegenden Erfindung zur Herstellung großer Mengen des Polyethercarbonatpolyols verwendet werden kann, wobei anfänglich ein gemäß den Schritten (α) und (β) in Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" DMC-Katalysator als nicht-aktivierter DMC-Katalysator in fester Form oder in Form einer Aufschlämmung in in Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Zugabe von Carbonsäure echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Schritt (δ)

Gemäß Schritt (δ) wird das in Schritt (γ) erhaltene Reaktionsgemisch, welches im allgemeinen einen Gehalt von 0,05 Gew.-% bis 10 Gew.-% Alkylenoxid enthält, im Reaktor einer Nachreaktion unterzogen oder kontinuierlich in

einen Nachreaktor zur Nachreaktion überführt, wobei im Wege der Nachreaktion der Gehalt an freiem Alkylenoxid reduziert wird. In Schritt (δ) wird im Wege der Nachreaktion der Gehalt an freiem Alkylenoxid bevorzugt auf weniger als 0,5 g/l, besonders bevorzugt auf weniger als 0,1 g/l im Reaktionsgemisch reduziert.

Wenn das in Schritt (γ) erhaltene Reaktionsgemisch im Reaktor verbleibt, wird vorzugsweise das Reaktionsgemisch zur Nachreaktion 10 min bis 24 h bei einer Temperatur von 60 bis 140 °C, besonders bevorzugt 1 h bis 12 h bei einer Temperatur von 80 bis 130 °C gehalten. Vorzugsweise wird das Reaktionsgemisch dabei gerührt bis der Gehalt an freiem Alkylenoxid auf weniger als 0,5 g/l, besonders bevorzugt auf weniger als 0,1 g/l im Reaktionsgemisch gesunken ist. Durch die Abreaktion von freiem Alkylenoxid und ggf. Kohlendioxid sinkt der Druck im Reaktor während der Nachreaktion im Schritt (δ) im Allgemeinen ab, bis ein konstanter Wert erreicht ist.

Als Nachreaktor kann beispielsweise ein Rohrreaktor, ein Schlaufenreaktor oder ein Rührkessel dienen. Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Als Nachreaktor wird bevorzugt ein Rohrreaktor eingesetzt, wobei beispielsweise ein einzelner Rohrreaktor oder auch eine Kaskade von mehreren, parallel angeordneten oder linear hintereinander geschalteten Rohrreaktoren verwendet werden kann. Bevorzugt liegt die Verweilzeit im Rohrreaktor dabei zwischen 5 min und 10 h, besonders bevorzugt zwischen 10 min und 5 h.

Alkylenoxide

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan. Vorzugsweise werden als Alkylenoxide Ethylenoxid, Propylenoxid und/oder Styroloxid, besonders bevorzugt Propylenoxid eingesetzt.

In einer Ausführungsform werden in Schritt (α) als weiteres Suspensionsmittel ein oder mehrere Verbindungen aus der Gruppe der Lösungsmittel oder eine oder mehrere H-funktionelle Starterverbindung ausgewählt aus der Gruppe bestehend aus Polyetherpolyolen, Polycarbonatpolyolen, Polyestercarbonatpolyolen, Polyetherestercarbonatpolyolen oder Polyethercarbonatpolyolen eingesetzt, wobei diese H-funktionelle Starterverbindungen jeweils eine Hydroxylzahl im Bereich von 3,0 $mg_{KOH}$/g bis 1000 $mg_{KOH}$/g aufweisen.

DMC-Katalysatoren

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(ii) wobei im zweiten Schritt der Feststoff aus der aus (i) erhaltenen Suspension durch bekannte Techniken (wie Zentrifugation oder Filtration) abgetrennt wird,

(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$$M(X)n \qquad (II)$$

wobei

M ausgewählt ist aus den Metallkationen $Zn^{2+}$, $Fe^{2+}$, $Ni^{2+}$, $M^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$$M_r(X)_3 \qquad (III)$$

wobei

M ausgewählt ist aus den Metallkationen $Fe^{3+}$, $Al^{3+}$, $Co^{3+}$ und $Cr^{3+}$,

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalat ist und

r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M(X)s \qquad (IV)$$

wobei

M ausgewählt ist aus den Metallkationen $Mo^{4+}$, $V^{4+}$ und $W^{4+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und

s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_t \qquad (V)$$

wobei

M ausgewählt ist aus den Metallkationen $Mo^{6+}$ und $W^{6+}$

X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$$(Y)_a\, M'(CN)_b\, (A)_c \qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VII)

$M_x[M'_{x'}(CN)_y]_z$ (VII)

worin M wie in Formel (II) bis (V) und

M' wie in Formel (VI) definiert ist, und

x, x', y und z sind ganzzahlig und so gewählt, dass die Elektronenneutralität der Doppelmetallcyanidverbindung gegeben ist.

Vorzugsweise ist

x=3,x'=1, y=6 und z=2,
M = Zn(II), Fe(II), Co(II) oder Ni(II) und
M' = Co(III), Fe(III), Cr(III) oder Ir(III).
Beispiele geeigneter Doppelmetallcyanid-Katalysatoren sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des Katalysators) aus der Suspension

durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen

Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischem Komplexliganden und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

Die gemäß dem erfindungsgemäßen Verfahren erhaltenen Polyethercarbonatpolyole haben bevorzugt eine Funktionalität von 2 bis 8, besonders bevorzugt von 2 bis 6 und ganz besonders bevorzugt von 2 bis 4. Das Molekulargewicht beträgt bevorzugt 400 bis 100000 g/mol und besonders bevorzugt 500 bis 6000 g/mol. Der $CO_2$-Gehalt beträgt bevorzugt $\geq$ 5 bis $\leq$ 35 Gew.-% und besonders bevorzugt $\geq$ 8 bis $\leq$ 25 Gew.-%.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer Carbonsäure basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

Die Erfindung wird durch die nachfolgenden Beispiele weiter erläutert, ohne jedoch darauf beschränkt zu sein.

## Beispiele

Einsatzstoffe:

*H-funktionelle Starterverbindungen*

Pimelinsäure - Difunktionelle Carbonsäure mit einem pKa Wert von 4,71
Oxalsäure - Difunktionelle Carbonsäure mit einem pKa Wert von 1,46
Zitronensäure - Vierfunktionelle Hydroxycarbonsäure mit einem ersten pKa Wert von 3,14

*Epoxide*

PO: Propylenoxid

*Suspensionsmittel*

cPC: cyclisches Propylencarbonat
Toluol

*Katalysator*

Als DMC-Katalysator wurde bei allen Beispielen DMC-Katalysator hergestellt gemäß Beispiel 6 in WO 01/80994 A1 eingesetzt.

Methoden:

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Bei dem in den Beispielen eingesetzten Gaseintragsrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde. Die Bezeichnung U/min bezieht sich auf die Anzahl der Umdrehungen des Rührers pro Minute.

Die Reaktion wurde mit Hilfe von *in situ* IR Spektroskopie verfolgt. Hierzu wurde eine Matrix-FM der Firma Bruker des Typs TNo. 120200MX mit einer 3 mm Diamantkopfsonde verwendet. Über Kalibrierungsdaten der Diamantkopfsonde wurden aus den gemessenen Spektren mit Hilfe der Software PEAXACT der Firma S-PACT die entsprechenden Konzentrationen der Reaktionskomponenten berechnet.

Die erhaltene Reaktionsmischung wurde mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

a) Bei der Copolymerisation von Propylenoxid und $CO_2$ resultierte neben dem cyclischen Propylencarbonat das Polyethercarbonatpolyol, welches einerseits in der nachfolgenden Formel gezeigte Polycarbonat-Einheiten enthält,

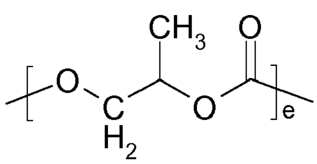

bzw.

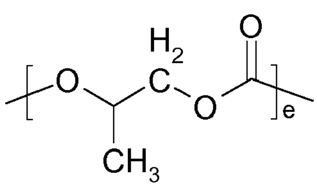

und andererseits in der nachfolgenden Formel gezeigte Polyether-Einheiten enthält.

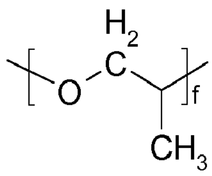

bzw.

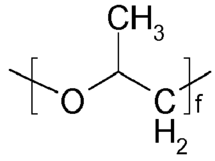

Das molare Verhältnis von Carbonatgruppen zu Ethergruppen im Polyethercarbonatpolyol (Verhältnis e/f) wurde mittels $^1$H-NMR Spektroskopie bestimmt. Eine Probe der gereinigten Reaktionsmischung wurde dazu jeweils in deuteriertem Chloroform gelöst und auf einem Spektrometer der Firma Bruker (Firma Bruker, DPX 400, 400 MHz; Pulsprogramm zg30, Wartezeit d1: 10s, 64 Scans) vermessen.

Die relevanten Resonanzen im $^1$H-NMR Spektrum (bezogen auf TMS = 0 ppm), die zur Integration verwendet wurden, sind wie folgt:

I1: 1,10 - 1,17 ppm: $CH_3$ Gruppe der Polyether-Einheiten, Fläche der Resonanz entspricht drei H Atomen,
12: 1,25 - 1,34 ppm: $CH_3$ Gruppe der Polycarbonat-Einheiten, Fläche der Resonanz entspricht drei H Atomen,

Angegeben sind der Anteil an Carbonatgruppen (mol%), den Anteil an Ethergruppen (mol%), der Anteil an NCA-Gruppen (mol%), der $CO_2$-Anteil (Gew.-%) sowie das molare Verhältnis von Carbonatgruppen zu Ethergruppen (e/f) im Polyethercarbonatpolyol. Die Werte wurden wie folgt berechnet:

Der relative Anteil an Carbonatgruppen (mol%) im Polyethercarbonatpolyol:

$$\text{Carbonatgruppen-Einbau (mol\%)} = \left[ \frac{\left(\frac{I2}{3}\right)}{\left(\frac{I1}{3}\right)+\left(\frac{I2}{3}\right)} \right] * 100$$

Der relative Anteil an Ethergruppen (mol%) im Polyethercarbonatpolyol:

$$\text{Ethergruppen-Einbau (mol\%)} = \left[ \frac{\left(\frac{I1}{3}\right)}{\left(\frac{I1}{3}\right)+\left(\frac{I2}{3}\right)} \right] * 100$$

Der $CO_2$-Anteil (Gew.-%) im Polyethercarbonatpolyol:

$$\text{CO}_2\text{-Anteil (Gew.-\%)} = \left[ \frac{\left(\frac{I2}{3}\right)*44}{\left(\frac{I1}{3}*58\right)+\left(\frac{I2}{3}*102\right)} \right] * 100$$

Das molare Verhältnis von Carbonatgruppen zu Ethergruppen im Polyethercarbonatpolyol (e/f):

$$\text{e/f} = I2/I1$$

*OH-Zahl (Hydroxylzahl)*

Die OH-Zahl (Hydroxylzahl) wurde in Anlehnung an DIN 53240-2 bestimmt, wobei jedoch *N*-Methylpyrrolidon anstelle von THF/Dichlormethan als Lösemittel verwendet wurde. Es wurde mit 0,5 molarer ethanolischer KOH Lösung titriert. Die Endpunktserkennung erfolgte mittels Potentiometrie. Als Prüfsubstanz diente zertifiziertes Rizinusöl. Die Angabe der Einheit in "$mg_{KOH}$/g" bezieht sich auf mg[KOH]/g[Polyethercarbonatpolyol].

*Gelpermeationschromatographie*

Das Zahlenmittel $M_n$ und das Gewichtsmittel $M_w$ des Molekulargewichts der erhaltenen Polyethercarbonatpolyole wurde mittels Gelpermeationschromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet. Die Polydispersität (PDI) wurde als das Verhältnis $M_w/M_n$ berechnet.

**Beispiel 1: Herstellung eines Polyethercarbonatpolyols mit Zitronensäure als Starter in Schritt γ**

Schritt α:

In einem 300 ml Druckreaktor ausgestattet mit einem Gaseintragsrührer und einer 3 mm Diamantkopf-FT-IR Sonde wurde eine Mischung aus DMC-Katalysator (24 mg) und Toluol (30 ml) vorgelegt und 15 min bei 25°C unter Durchleiten von Argon durch die Reaktionsmischung gerührt (800 U/min).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 2 g Propylenoxid über eine HPLC-Pumpe (3 ml/min) zudosiert. Die Reaktionsmischung wurde bei 130°C gerührt (800 U/min) bis die charakteristischen Banden für Propylenoxid nicht mehr über *in-situ* IR Spektroskopie detektierbar waren. Die Zugabe von 2 g Propylenoxid wurde ein zweites und drittes Mal wiederholt.

Schritt γ:

Die Temperatur wurde auf 130°C gehalten und während der nachfolgenden Schritte der Druck im Druckreaktor durch Nachdosieren von $CO_2$ bei 15 bar gehalten. Es wurden unter Rühren (800 U/min) weitere 52,2 g Propylenoxid über eine HPLC-Pumpe (0,7 mL/min) zudosiert. Beginnend mit demselben Zeitpunkt, zu dem die Zugabe von Propylenoxid in Schritt γ begonnen wurde, wurde Zitronensäure (0,02 mol; 2,88 g) gelöst in 1,4-Dioxan (0,2 g/ml; 14,5 mL) über eine separate HPLC-Pumpe (0,25 ml/min) zugegeben. Die charakteristische Bande für Carbonsäure war über *in-situ* IR Spektroskopie nicht detektierbar. Nach Ende der Zugabe von Propylenoxid wurde die Reaktionsmischung noch weitere 45 min bei 130°C gerührt. Durch Abkühlen des Druckreaktors im Eisbad wurde die Reaktion beendet. Der Überdruck wurde abgelassen.

Die tiefsiedenden Bestandteile der Reaktionsmischung wurden mit Hilfe eines Fallfilmverdampfers entfernt und das resultierende Produkt analysiert. Der Anteil der im erhaltenen Polyethercarbonatpolyol eingebauten Carbonatgruppen (mol%), Ethergruppen (mol%), der $CO_2$-Anteil (Gew.-%), das Verhältnis von Carbonat- zu Ethereinheiten, das erhaltene Molekulargewicht, der Polydispersionsindex (PDI) sind in Tabelle 1 angegeben.

**Vergleichsbeispiel 2: Herstellung eines Polyethercarbonatpolyols mit Zitronensäure als Starter in Schritt α**

Schritt α:

In einem 300 ml Druckreaktor ausgestattet mit einem Gaseintragsrührer und einer 3 mm Diamantkopf-FT-IR Sonde wurde eine Mischung aus DMC-Katalysator (24 mg), Toluol (30 ml) und einer Lösung von Zitronensäure in 1,4-Dioxan (2,88 g Zitronensäure; 0,2 g/ml) vorgelegt und 15 min bei 25°C unter Durchleiten von Argon durch die Reaktionsmischung gerührt (800 U/min).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 2 g Propylenoxid über eine HPLC-Pumpe (3 ml/min) zudosiert. Die Reaktionsmischung wurde 20 min bei 130°C gerührt (800 U/min). Es wurde kein Abfall der charakteristischen Schwingungsbanden für Propylenoxid über *in-situ* IR Spektroskopie beobachtet. Es fand keine Umsetzung von Propylenoxid statt. Die Zugabe von 2 g Propylenoxid wurde ein zweites und drittes Mal wiederholt. Die Reaktionsmischung wurde jeweils 20 min bei 130°C gerührt (800 U/min). Es wurde kein Abfall der charakteristischen Schwingungsbanden für Propylenoxid über *in-situ* IR Spektroskopie beobachtet. Es fand keine Umsetzung von Propylenoxid statt. Auf Grund der Akkumulation von Propylenoxid im Reaktionsgemisch wurde die Reaktion abgebrochen.

Es wurde kein Polyethercarbonatpolyol erhalten.

*Vergleich*

Die nachfolgende Tabelle 1 zeigt einen Vergleich der unter Verwendung von Zitronensäure als Starter erhaltenen Ergebnisse bei kontinuierlicher Dosierung von Zitronensäure während Schritt $\gamma$ (semi-batch CAOS Verfahren, Beispiel 1) im Vergleich zu einer Vorlage von Zitronensäure in Schritt $\alpha$ (semi-batch Verfahren, Vergleichsbeispiel 2).

**Tabelle 1**

| Beispiel | Dosierung Starter | Carbonatgruppen | Ethergruppen | $CO_2$-Anteil | e/f | $M_n$ | PDI |
|---|---|---|---|---|---|---|---|
| | | [mol%] | [mol%] | [Gew -%] | [--] | [g/mol] | [--] |
| 1 | kontinuierliche Dosierung in Schritt $\gamma$ | 10,4 | 89,6 | 7,3 | 0,09 | 6118 | 2,4 |
| 2 (Vgl.) | Vorlage in Schritt $\alpha$ | Keine Polymerbildung | | | | | |
| Vgl.: Vergleichsbeispiel | | | | | | | |

Tabelle 1 zeigt, dass Polyethercarbonatpolyole bei kontinuierlicher Dosierung von Zitronensäure in Schritt $\gamma$ erhalten werden (Beispiel 1), während bei Vorlage in Schritt $\alpha$ (Vergleichsbeispiel 2) keine Polymerbildung erfolgt. Die kontinuierliche Dosierung in Schritt $\gamma$ (CAOS Verfahren) ist somit essentiell für die Herstellung von Polyethercarbonatpolyolen bei Verwendung säurefunktioneller Starter.

**Beispiel 3: Herstellung eines Polyethercarbonatpolyols mit Pimelinsäure als Starter in Schritt $\gamma$**

Schritt $\alpha$:

In einem 300 ml Druckreaktor ausgestattet mit einem Gaseintragsrührer und einer 3 mm Diamantkopf-FT-IR Sonde wurde eine Mischung aus DMC-Katalysator (24 mg) und Toluol (30 ml) vorgelegt und 15 min bei 25°C unter Durchleiten von Argon durch die Reaktionsmischung gerührt (800 U/min).

Schritt $\beta$:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 2 g Propylenoxid über eine HPLC-Pumpe (3 ml/min) zudosiert. Die Reaktionsmischung wurde bei 130°C gerührt (800 U/min) bis die charakteristischen Banden für Propylenoxid nicht mehr über *in-situ* IR Spektroskopie detektierbar waren. Die Zugabe von 2 g Propylenoxid wurde ein zweites und drittes Mal wiederholt.

Schritt $\gamma$:

Die Temperatur wurde auf 130°C gehalten und während der nachfolgenden Schritte der Druck im Druckreaktor durch Nachdosieren von $CO_2$ bei 15 bar gehalten. Es wurden unter Rühren (800 U/min) weitere 56,6 g Propylenoxid über eine HPLC-Pumpe (0,7 mL/min) zudosiert. Beginnend mit demselben Zeitpunkt, zu dem die Zugabe von Propylenoxid in Schritt $\gamma$ begonnen wurde, wurde Pimelinsäure (0,02 mol; 2,40 g) gelöst in 1,4-Dioxan (0,3 g/ml; 8,09 mL) über eine separate HPLC-Pumpe (0,16 ml/min) zugegeben. Die charakteristische Bande für Carbonsäure war über *in-situ* IR Spektroskopie nicht detektierbar. Nach Ende der Zugabe von Propylenoxid wurde die Reaktionsmischung noch weitere 45 min bei 130°C gerührt. Durch Abkühlen des Druckreaktors im Eisbad wurde die Reaktion beendet. Der Überdruck wurde abgelassen.

Die tiefsiedenden Bestandteile der Reaktionsmischung wurden mit Hilfe eines Fallfilmverdampfers entfernt und das resultierende Produkt analysiert. Der Anteil der im erhaltenen Polyethercarbonatpolyol eingebauten Carbonatgruppen (mol%), Ethergruppen (mol%), der $CO_2$-Anteil (Gew.-%), das Verhältnis von Carbonat- zu Ethereinheiten, das erhaltene Molekulargewicht, der Polydispersionsindex (PDI) sind in Tabelle 2 angegeben.

**Vergleichsbeispiel 4: Herstellung eines Polyethercarbonatpolyols mit Oxalsäure als Starter in Schritt $\gamma$**

Schritt $\alpha$:

In einem 300 ml Druckreaktor ausgestattet mit einem Gaseintragsrührer und einer 3 mm Diamantkopf-FT-IR

Sonde wurde eine Mischung aus DMC-Katalysator (12 mg) und Toluol (30 ml) vorgelegt und 15 min bei 25°C unter Durchleiten von Argon durch die Reaktionsmischung gerührt (800 U/min).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 2 g Propylenoxid über eine HPLC-Pumpe (3 ml/min) zudosiert. Die Reaktionsmischung wurde bei 130°C gerührt (800 U/min) bis die charakteristischen Banden für Propylenoxid nicht mehr über *in-situ* IR Spektroskopie detektierbar waren. Die Zugabe von 2 g Propylenoxid wurde ein zweites und drittes Mal wiederholt.

Schritt γ:

Die Temperatur wurde auf 100°C nachgeregelt und während der nachfolgenden Schritte der Druck im Druckreaktor durch Nachdosieren von $CO_2$ bei 15 bar gehalten. Es wurden unter Rühren (800 U/min) weitere 35 g Propylenoxid über eine HPLC-Pumpe (0,5 ml/min) zudosiert. Beginnend mit demselben Zeitpunkt, zu dem die Zugabe von Propylenoxid in Schritt γ begonnen wurde, wurde Oxalsäure (0,02 mol; 1,35 g) gelöst in Diethylether (0,01 g/ml; 135 mL) über eine separate HPLC-Pumpe (2,25 ml/min) zugegeben. Es wurde ein stetiger Anstieg der charakteristischen Banden für Propylenoxid über *in-situ* IR Spektroskopie beobachtet. Auf Grund der Akkumulation von Propylenoxid im Reaktionsgemisch wurde die Reaktion abgebrochen.

Es wurde kein Polyethercarbonatpolyol erhalten.

*Vergleich*

Die nachfolgende Tabelle 2 zeigt einen Vergleich der bei kontinuierlicher Dosierung von Zitronensäure (Beispiel 1) oder Pimelinsäure (Beispiel 3) in Schritt γ erhaltenen Ergebnisse im Vergleich zu der Verwendung von Oxalsäure (Vergleichsbeispiel 4).

**Tabelle 2**

| Beispiel | Carbonsäure | pKa | Carbonatgruppen | Ethergruppen | $CO_2$-Anteil | e/f | $M_n$ | PDI |
|---|---|---|---|---|---|---|---|---|
| | | | [mol%] | [mol%] | [Gew.-%] | [--] | [g/mol] | [--] |
| 1 | Zitronensäure | 3,14 | 10,4 | 89,6 | 7,3 | 0,09 | 6118 | 2,4 |
| 3 | Pimelinsäure | 4,71 | 11,4 | 88,6 | 8,0 | 0,14 | 7034 | 2,2 |
| 4 (Vgl.) | Oxalsäure | 1,46 | Keine Polymerbildung | | | | | |
| Vgl.: Vergleichsbeispiel | | | | | | | | |

Tabelle 2 zeigt, dass Polyethercarbonatpolyole bei Verwendung einer schwach sauren Carbonsäure (Zitronensäure, pKa Wert von 3,14, Beispiel 1 und Pimelinsäure, pKa Wert von 4,71, Beispiel 3) erhalten werden, während bei Verwendung einer stark sauren Carbonsäure (Oxalsäure, pKa Wert von 1,46, Vergleichsbeispiel 4) keine Polymerbildung erfolgt.

## Patentansprüche

1. Verfahren zur Herstellung von Polyethercarbonatpolyolen durch Anlagerung von Alkylenoxiden und Kohlendioxid an Carbonsäuren in Gegenwart eines Doppelmetallcyanid (DMC)-Katalysators, wobei ein oder mehrere Carbonsäuren während der Reaktion kontinuierlich in den Reaktor zudosiert werden, **dadurch gekennzeichnet, dass**

   - die Carbonsäure mindestens difunktionell ist und einen pKa Wert größer gleich 1,5 aufweist,
   - die Zugabe der ein oder mehreren Carbonsäure so erfolgt, dass zu jedem Zeitpunkt des erfindungsgemäßen Verfahrens die molare Konzentration von nicht umgesetzter Carbonsäure im Reaktionsgemisch einen Wert in Höhe von 0,001 mol/g multipliziert mit der pro Liter Reaktionsmischung eingesetzten Masse des Katalysators angegeben in Gramm nicht überschreitet, und
   - zwei im gleichen Molekül vorliegende Carbonsäuregruppen mindestens durch ein Kohlenstoffatom voneinander getrennt sind.

**2.** Verfahren gemäß Anspruch 1, wobei das Verfahren die folgenden Schritten umfasst:

(α) ein Suspensionsmittel, das keine H-funktionellen Gruppen enthält und ausgewählt ist aus einer oder mehreren Verbindung(en) aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden, wird in einem Reaktor vorgelegt und
(γ) ein oder mehrere Carbonsäuren werden während der Reaktion kontinuierlich in den Reaktor zudosiert.

**3.** Verfahren gemäß Anspruch 2, wobei anschließend an Schritt (α)

(β) zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird.

**4.** Verfahren gemäß einem oder mehreren der vorangehenden Ansprüche, wobei als Carbonsäure mindestens eine Verbindung der Formel RR'R"C-COOH eingesetzt wird, wobei

- R für einen gegebenenfalls Heteroatom-substituierten Hydroxyalkyl-, Hydroxyalkenyl-, Hydroxyaryl-, Carboxyalkyl-, Carboxyalkenyl- oder Carboxyaryl-Rest oder eine OH, COOH, $NH_2$ oder NHR"' Gruppe steht , wobei R"' einen Alkyl-, Alkenyl- oder Aryl-Rest bedeutet, steht und
- R' und R" unabhängig voneinander für Wasserstoff oder einen gegebenenfalls Heteroatom-substituierten Alkyl-, Alkenyl-, Aryl-, Hydroxyalkyl-, Hydroxyalkenyl-, Hydroxyaryl-, Carboxyalkyl-, Carboxyalkenyl- oder Carboxyaryl-Rest stehen.

**5.** Verfahren gemäß einem oder mehreren der vorangehenden Ansprüche, wobei als Carbonsäure mindestens eine Verbindung ausgewählt aus der Gruppe enthaltend Malonsäure, Maleinsäure, Fumarsäure, Bernsteinsäure, Oxalessigsäure, Glutarsäure, Adipinsäure, Pimelinsäure, Korksäure, Acelainsäure, Sebacinsäure, Glycolsäure, Milchsäure, Tartronsäure, Apfelsäure, Weinsäure, Zitronensäure, Isozitronensäure, Mandelsäure, Gallussäure, γ-Hydroxybuttersäure, γ-Aminobuttersäure, Ricinolsäure, Salicylsäure, Hippursäure, Phthalsäure, Isophthalsäure, Terephthalsäure, Shikimisäure, Chinasäure, Chorisminsäure, Gluconsäure und der Aminosäuren eingesetzt wird.

**6.** Verfahren gemäß einem oder mehreren der vorangehenden Ansprüche 3 bis 5, wobei Schritt (β) unter Inertgasatmosphäre, unter einer Atmosphäre aus Inertgas-Kohlendioxid-Gemisch oder unter einer Kohlendioxid-Atmosphäre durchgeführt wird.

**7.** Verfahren gemäß einem oder mehreren der vorangehenden Ansprüche 3 bis 6, wobei in Schritt (γ) DMC-Katalysator und ein oder mehrere Carbonsäuren während der Reaktion kontinuierlich in den Reaktor dosiert werden und das resultierende Reaktionsgemisch kontinuierlich aus dem Reaktor entfernt wird.

**8.** Verfahren gemäß Anspruch 7, wobei der Doppelmetallcyanid-Katalysator und die Carbonsäure über separate Dosierstellen dem Reaktionsgemisch zugeführt werden.

**9.** Verfahren gemäß einem oder mehreren der vorangehenden Ansprüche 3 bis 8, wobei die Schritte (β) und/oder (γ) bei einer Temperatur von $\geq$ 100 °C bis $\leq$ 130 °C durchgeführt werden.

**10.** Verfahren gemäß einem oder mehreren der vorangehenden Ansprüche 3 bis 9, wobei die Schritte (β) und/oder (γ) bei einem Druck von $\geq$ 10 mbar bis $\leq$ 100 bar durchgeführt werden.

**11.** Verfahren gemäß einem oder mehreren der vorangehenden Ansprüche, wobei als Alkylenoxid Ethylenoxid, Propylenoxid und/oder Styroloxid eingesetzt wird.

**12.** Verfahren gemäß einem oder mehreren der vorangehenden Ansprüche 3 bis 11, wobei in Schritt (α) als weiteres Suspensionsmittel ein oder mehrere Verbindungen aus der Gruppe der Lösungsmittel oder eine oder mehrere H-funktionelle Starterverbindung ausgewählt aus der Gruppe bestehend aus Polyetherpolyolen, Polycarbonatpolyolen, Polyestercarbonatpolyolen, Polyetherestercarbonatpolyolen oder Polyethercarbonatpolyolen eingesetzt wird, wobei diese H-funktionelle Starterverbindungen jeweils eine Hydroxylzahl im Bereich von 3,0 $mg_{KOH}/g$ bis 1000 $mg_{KOH}/g$

aufweisen.

**13.** Verfahren gemäß einem oder mehreren der vorangehenden Ansprüche, wobei der eingesetzte Doppelmetallcyanid-Katalysator mindestens eine Verbindung ausgewählt aus der Gruppe Zinkhexacyanocobaltat(III), Zinkhexacyanoiridat(III), Zinkhexacyanoferrat(III) und/oder Cobalt(II)hexacyanocobaltat(III) enthält.

**14.** Polyethercarbonatpolyole erhalten nach dem erfindungsgemäßen Verfahren gemäß einem oder mehreren der vorangehenden Ansprüche.

Europäisches Patentamt
European Patent Office
Office européen des brevets

# EUROPÄISCHER RECHERCHENBERICHT

Nummer der Anmeldung
EP 15 16 9253

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 2 703 425 A1 (BAYER MATERIALSCIENCE AG [DE]) 5. März 2014 (2014-03-05)<br>* das ganze Dokument *<br>----- | 1-14 | INV.<br>C08G64/34<br>C08G65/26 |
| | | | RECHERCHIERTE SACHGEBIETE (IPC) |
| | | | C08G |

1 Der vorliegende Recherchenbericht wurde für alle Patentansprüche erstellt

| Recherchenort | Abschlußdatum der Recherche | Prüfer |
|---|---|---|
| Den Haag | 17. August 2015 | Hoffmann, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 15 16 9253

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-08-2015

| Im Recherchenbericht angeführtes Patentdokument | Datum der Veröffentlichung | Mitglied(er) der Patentfamilie | Datum der Veröffentlichung |
|---|---|---|---|
| EP 2703425 A1 | 05-03-2014 | CA 2882891 A1 | 06-03-2014 |
| | | CN 104540875 A | 22-04-2015 |
| | | EP 2703425 A1 | 05-03-2014 |
| | | EP 2888308 A1 | 01-07-2015 |
| | | KR 20150048769 A | 07-05-2015 |
| | | US 2015225503 A1 | 13-08-2015 |
| | | WO 2014033070 A1 | 06-03-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2007071578 A2
- WO 2008092767 A
- EP 2703425 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1
- WO 0180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- *Eur. J. Biochem.,* 1989, vol. 182, 349-156
- **T. MUSSINI et al.** *Pure & Appl. Chem.,* 1985, vol. 57 (6), 865-876
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** *Angew. Chem., Int. Ed.,* 2009, vol. 48, 931